**Europäisches Patentamt**

**European Patent Office**

**Office européen des brevets**

(11) Numéro de publication : **0 321 357 B1**

(12) **FASCICULE DE BREVET EUROPEEN**

(19)

(45) Date de publication du fascicule du brevet :
**03.06.92 Bulletin 92/23**

(21) Numéro de dépôt : **88403220.2**

(22) Date de dépôt : **16.12.88**

(51) Int. Cl.⁵ : $H04N\ 7/00$, $H04N\ 7/12$

(54) **Procédé de sous-échantillonnage dans l'axe du mouvement d'une séquence d'images électroniques.**

(30) Priorité : **16.12.87 FR 8717602**

(43) Date de publication de la demande :
**21.06.89 Bulletin 89/25**

(45) Mention de la délivrance du brevet :
**03.06.92 Bulletin 92/23**

(84) Etats contractants désignés :
**DE GB IT NL**

(56) Documents cités :
**WO-A-87/05770**
**US-A- 3 715 483**
**US-A- 4 622 578**

(73) Titulaire : **ETAT FRANCAIS représenté par le Ministre des PTT (Centre National d'Etudes des Télécommunications)**
**38-40 rue du Général Leclerc**
**F-92131 Issy-les-Moulineaux (FR)**
Titulaire : **TELEDIFFUSION DE FRANCE S.A.**
**21-27, rue Barbès**
**F-92542 Montrouge Cédex (FR)**

(72) Inventeur : **Pelé, Danièle**
**11, Avenue du Mail**
**F-35000 Rennes (FR)**
Inventeur : **Choquet, Bruno**
**27, Allée J.S. Bach**
**F-35000 Rennes (FR)**

(74) Mandataire : **Corlau, Vincent**
**c/o Cabinet Vidon Immeuble Germanium 80 avenue des Buttes de Coesmes**
**F-35700 Rennes (FR)**

## Description

Le domaine de l'invention est celui de l'analyse et du codage de séquences d'images électroniques, et plus particulièrement du sous-échantillonnage de telles images électroniques, par élimination sélective de certains points dans l'image, ou de certaines images ou trames d'images complètes.

Dans un cas spécifique détaillé ci-après, le procédé suivant l'invention s'applique au sous-échantillonnage de séquences d'images en haute définition destinées à être transmises à travers un canal à débit limité. Une telle application préférentielle de ce type est la transmission de télévision haute définition sur canal MAC.

Toutefois, le procédé de l'invention peut aussi bien être utilisé dans tous systèmes analysant une séquence d'images (robotique, suivi de cibles, recherche de paramètres spatiaux-temporels,...), ou une séquence d'ensembles de données (applications médicales, météorologiques,...).

Pour l'application et la transmission de TVHD sur canal MAC, les normes actuelles à respecter consistent à comprimer le signal d'images TVHD sous forme d'un signal d'images TV normal, soit selon les normes européennes, soit selon les normes américano-japonaises.

Les normes de transmission figurent en table 1.

### TABLE 1
### Normes européennes de TV et TVHD

|  | TVHD | TV | Compression |  |
|---|---|---|---|---|
| résolution verticale | 1250 lignes | 625 lignes | 2:1 |  |
| Résolution horizontale | 1440 points ou 1920 points | 720 points 960 points | 2:1 | total 4:1 |

si source TVHD 1250/1440/50/1:1 (désentrelacée) : taux de compression 8:1

Il en résulte que tout procédé d'échantillonnage doit être en mesure d'assurer un taux de compression soit de 1:4, soit de 1:8, suivant que la source HD d'images est entrelacée, ou désentrelacée, respectivement.

On connaît déjà différents procédés de sous-échantillonnage assurant un tel taux de compression.

Les exemples de l'état de la technique donnés ci-après correspondent à des procédés de sous-échantillonnages d'images désentrelacées, ces procédés ayant également donné lieu à des adaptations aux images entrelacées.

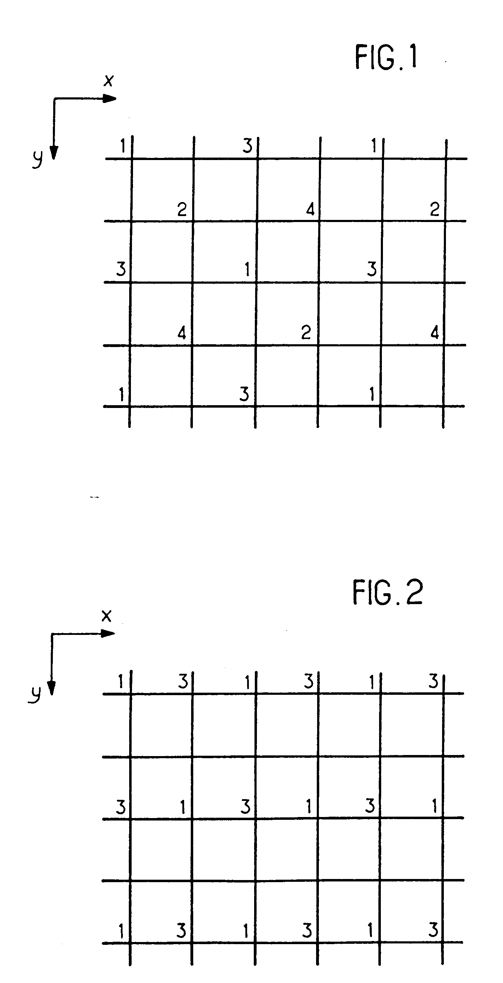

Un premier procédé de sous-échantillonnage connu est le procédé japonais "Muse" dit "quinconce ligne, non stable". Ce procédé consiste à réaliser un échantillonnage sur quatre images, l'image 1 étant échantillonnée aux points 1 et 3, et l'image 3 étant échantillonnée aux points 2 et 4 (fig. 1). Les images 2 et 4 sont reconstruites dans le décodeur, en utilisant une méthode d'interpolation temporelle.

Cette méthode présente l'avantage d'obtenir de bons échantillons, mais demande des séquences d'images de haute qualité. Il résulte en outre, en une diminution de la résolution spatiale du signal transmis.

Un second procédé connu, dit "field skipped" (saut de trame) consiste à éliminer systématiquement une trame sur deux, et à échantillonner aux mêmes lignes chaque trame conservée (fig. 2), mais en quinconce. Ce procédé entraîne une perte de la moitié de la résolution verticale.

Un troisième procédé connu, développé à la suite du système Muse, consiste à réaliser un échantillonnage sur quatre trames, en supprimant systématiquement les trames 3 et 4. En s'appuyant sur la représentation de la figure 1, le procédé consiste à échantillonner la trame 1 en 1 et 3, et la trame 2 en 2 et 4. Cette méthode présente l'inconvénient d'obliger à une gestion temporelle de l'échantillonnage en mémoire tampon, du fait que les échantillons 3 sont prélevés, dans le temps, avant les échantillons 2, mais doivent ensuite être transmis

2

après ces derniers, au moment du signal de troisième trame.

En résumé, les méthodes connues défavorisent soit la résolution spatiale (Muse), soit la résolution temporelle, soit encore entraînent une diminution de la résolution verticale par deux (field skip).

On connaît d'autre part un systèmede compression de signal vidéo tel que décrit dans le document de brevet WO-A-8 705, 770 (British Broadcasting Corporation), proposant l'utilisation de vecteurs mouvement définis sur l'image pour réaliser le traitement de compression, dans le but d'améliorer le sous-échantillonnage des zones d'images mobiles. La structure d'échantillonnage proposée est principalement une structure du type quinconce ligne, répartie sur chaque trame de jeux successifs de quatre trames. Le masque d'échantillonnage des trames échantillonnées, à partir de la seconde trame de chaque jeu, est déplacé en fonction des informations des vecteurs mouvements, de façon à échantillonner des points complémentaires de ceux échantillonnés dans la première trame pour maximiser la quantité d'informations transmises, et donc la définition d'images.

Toutefois, le principe britannique présente l'inconvénient de répercuter intégralement le module des vecteurs mouvement sur la structure d'échantillonnage. Ceci impose de réaliser des systèmes complexes, réclamant une forte consommation en traitement de données pour la manipulation des modules de vecteurs mouvement. La complexité s'accroît encore dans le cas des reconstructions impliquant la mise en mémoire temporaire des premières trames dans les jeux de quatre trames, pour la reconstitution d'image.

L'invention a notamment pour objectif de pallier l'ensemble de ces inconvénients.

Plus précisément, un premier objectif de l'invention est de réaliser un sous-échantillonnage d'images permettant d'optimiser la résolution spatiale et temporelle du signal comprimé, afin de permettre une reconstruction la plus fidèle possible de l'image reçue à partir dudit signal d'image comprimé, et éventuellement de données d'assistance complémentaires.

Un second objectif de l'invention est de maximiser l'information transmise dans le signal comprimé, en s'efforçant à chaque instant de rafraîchir les points d'image des objets en mouvement, qui ont été le plus anciennement transmis.

Un autre objectif essentiel de l'invention est de fournir un système de sous-échantillonnage qui tienne compte des mouvements de points d'image dans le plan d'images, pour maximiser la quantité d'informations transmises, sans avoir à gérer la répercution du module intégral des vecteurs mouvement sur la structure d'échantillonnage.

Un objectif complémentaire de l'invention est de fournir un procédé de sous-échantillonnage permettant une reconstitution d'une image de même qualité que l'image source. Ainsi, de façon préférentielle, le procédé de sous-échantillonnage doit permettre de restituer un signal d'images désentrelacé à partir d'un signal source désentrelacé, et une image reconstituée entrelacée à partir d'une image source entrelacée.

Un autre objectif de l'invention est de fournir un procédé de sous-échantillonnage de signal d'image, qui soit notamment compatible avec le procédé de rafraîchissement adaptatif par quantification vectorielle de la demande de brevet française FR-A-260 88 64 publiée le 24.06.1988, correspondant à EP-A- 0276603 (publiée le 03.08.1988) et/ou avec le procédé d'estimation multi-prédictif du mouvement des points d'une image électronique de la demande de brevet française conjointe, FR-A-262 49 97 publiée le 23.06.1989, correspondant à EP-A-0321356 (publiée le 21.06.1989) aux noms des mêmes déposants.

Ces objectifs, ainsi que d'autres qui apparaîtront par la suite, sont atteints à l'aide d'un procédé de sous-échantillonnage d'un signal d'images ou de zones d'images appartenant à une séquence d'images électroniques, dans le but d'obtenir une compression dudit signal,

ledit procédé étant du type consistant à déterminer un champ de vecteurs vitesse pour chaque image à sous-échantillonner, en associant un vecteur de vitesse de déplacement dans le plan de l'image à chacun des points de ladite image, et à supprimer certaines images dans la sequence et/ou certains points d'image dans les images sous-échantillonnées, en fonction des vitesses de déplacement des points, de façon à maximiser la quantitée d'information transmise sous contrainte d'un débit maximal donné,

procédé caractérisé en ce que la structure de sous-échantillonnage consiste à appliquer sur chaque image, ou zone d'image, un masque de sous-échantillonnage susceptible de prendre deux positions distinctes,

et en ce que la position du masque d'échantillonnage est choisie de façon à éviter de retenir, pour chaque image courante, celle des deux positions revenant à sélectionner des points d'image correspondant spatialement à la projection approximative des points source conservés lors du sous-échantillonnage de l'image sous-échantillonnée précédente, ladite projection résultant de l'application à chacun desdits points source du vecteur de déplacement associé.

De cette manière, en choisissant une structure d'échantillonnage en quinconce adéquate, la répétitivité de la structure d'échantillonnage permet de ne s'attacher qu'à la parité des valeurs de vecteur, et non à leur module intégral.

Dans un mode de réalisation préférentiel de l'invention, l'élimination desdits points d'images s'effectue par l'élimination systématique de toutes les lignes paires ou de toutes les lignes impaires de l'image, dans le cas d'un signal désentrelacé.

Dans un autre mode de réalisation préférentiel, adapté à un signal entrelacé, on élimine soit la trame paire, soit la trame impaire, en fonction de la parité du vecteur-vitesse.

De façon avantageuse, les images sous-échantillonnées subissent également une compression horizontale, préférentiellement par élimination de colonnes paires ou de colonnes impaires, la parité des colonnes éliminées, pour chaque image, étant telle que lesdites colonnes éliminées correspondent spatialement approximativement à la projection des colonnes conservées dans l'image sous-échantillonnée précédente, ladite projection résultant de l'application, aux points desdites colonnes de l'image source précédente, de vecteurs-vitesse associés.

De façon préférentielle, et dans le cas de l'application du procédé de sous-échantillonnage de l'invention pour la compression d'un signal TVHD dans un canal MAC (taux de compression 1:4 ou 1:8), les images, trames d'images respectivement, de la séquence, sont sous-échantillonnées par paquets de quatre images, trames d'images, successives, avec élimination de deux images, trames d'images, au sein de chaque paquet.

Dans le cas d'un signal d'image désentrelacée, d'une part, pour chaque première image sous-échantillonnée du paquet, on élimine systématiquement soit les lignes paires, soit les lignes impaires, et d'autre part, on élimine systématiquement, pour la seconde image sous-échantillonnée dudit paquet, les lignes de parité telle qu'elles correspondent spatialement approximativement à la projection du jeu de lignes conservées dans ladite première image sous-échantillonnée du paquet.

Dans le cas d'un signal d'image entrelacée, on conserve systématiquement chaque première trame au sein de chaque paquet, et on choisit d'éliminer soit la deuxième trame, soit la troisième trame du paquet, de façon à éliminer la trame de parité telle qu'elle correspond spatialement approximativement à la projection de ladite première trame sous-échantillonnée du paquet, ladite projection résultant de l'application, aux points de ladite première trame sous-échantillonnée, des vecteurs-vitesse associés.

D'autres caractéristiques et avantages de l'invention apparaîtront à la lecture de la description suivante de modes de réalisation préférentiels de l'invention, donnés à titre illustratif, et des dessins annexés dans lesquels :

– la figure 1 illustre le procédé connu de sous-échantillonnage "quinconce ligne non stable" ;

– la figure 2 représente le procédé connu de sous-échantillonnage en sauts de trame quinconce ;

– les figures 3A, 3B illustrent le procédé de sous-échantillonnage selon l'invention, dans le cas d'une source d'images non entrelacée, pour un vecteur mouvements pair et impair respectivement ;

– la figure 4 illustre les résultats du sous-échantillonnage selon l'invention, dans l'axe du déplacement, après application du procédé illustré en figures 3A, 3B ;

– - la figure 5 est un schéma synoptique d'un mode de réalisation avantageux pour un circuit mettant en oeuvre le procédé de sous-échantillonnage illustré en figures 3A, 3B et 4 ;

– la figure 6 représente un mode de réalisation préférentiel d'un circuit mettant en oeuvre le procédé de sous-échantillonnage suivant l'invention pour une source d'images entrelacée.

Le principe fondamental de la base de la présente invention est d'adapter la structure de sous-échantillonnage du signal source aux mouvements des points d'images.

Le mouvement des points d'images est estimé, de façon connue, selon la méthode de FOURIER, la méthode "par correspondance", ou encore la méthode utilisant des gradients spatiaux-temporels (voir T.S. HUANG ("Image sequence analysis : Motion Estimation" in Image Sequence Analysis ; Ed. T.S. HUANG, Springer Verlag 1981)

On peut également utiliser les estimateurs de mouvements multi-prédiction et/ou dans le sens du mouvement, décrit dans la demande de brevet conjointe déjà citée, FR-A- 2624997, déposée le 16/12/87 aux noms des mêmes déposants sous le titre "Procédé d'estimation multi-prédictif des mouvements des points d'une image électronique".

Dans le mode de réalisation présenté ici, l'objectif fondamental du procédé de sous-échantillonnage consiste à optimiser l'opération de reconstruction de l'image à partir du signal d'images sous-échantillonné reçu par le décodeur. Ce mode de réalisation correspond en effet plus particulièrement à un élément d'une chaîne de traitement d'un signal d'images HD, destiné à être transmis par canal MAC.

La reconstitution d'image s'effectue avantageusement par compensation de mouvement.

La compensation de mouvement est définie par les procédures suivantes :

1) l'image HD à l'instant t est supposée entièrement connue,

2) le codeur fournit au canal de transmission des données déduites d'une segmentation de l'image avec n vecteurs par zone (n $\geq$ 1),

3) par échantillons réels reçus à l'instant t + 1, on sélectionne un vecteur parmi les 11 candidats,

4) suivant la précision du vecteur-vitesse, on l'affine au décodeur par la mise en oeuvre d'une itération de l'algorithme d'estimation de mouvement (le vecteur-vitesse sélectionné sert de valeur prédite),

5) on affecte à chaque point à compenser un vecteur-vitesse, fonction (linéaire) de l'environnement,

6) on projette l'image t en t + 1 en fonction des vecteurs-vitesse et on retient les seuls points compensables (ce sont les points autres que les points échantillonnés en t + 1, situés généralement au milieu de ces points),

7) les points restants (autres que échantillonnés et compensés) sont interpolés par filtrage linéaire spatial.

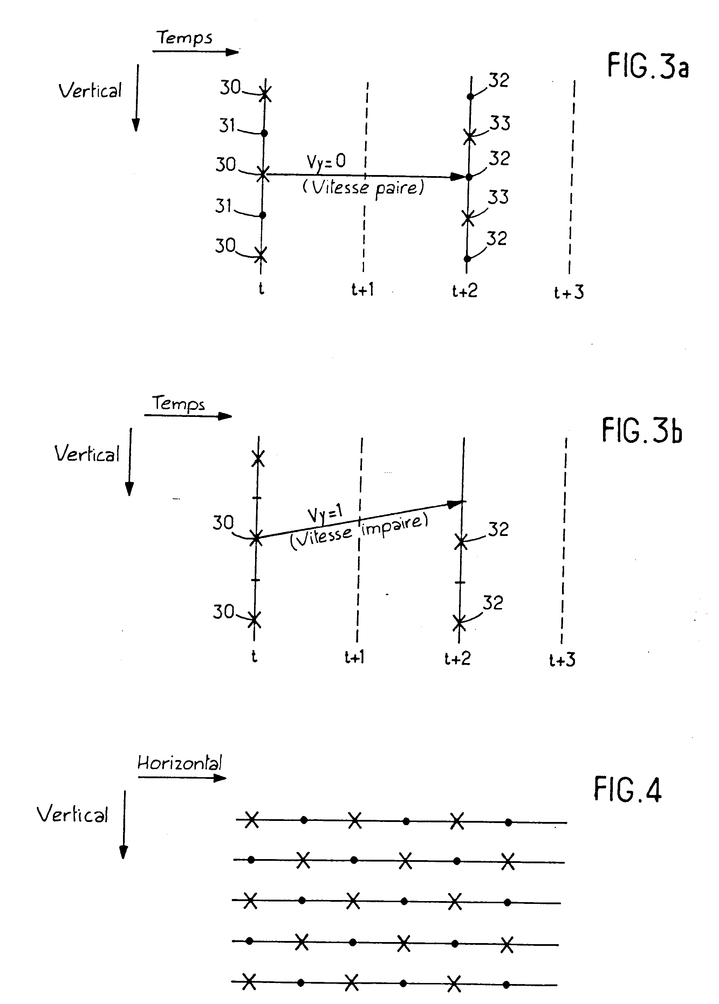

L'idée fondamentale de l'invention est donc d'obtenir, après compensation, une maille finale telle que représentée en figure 4, en regardant dans l'axe du déplacement. Les points réellement transmis correspondent aux pixels marqués d'un X, les pixels intermédiaires étant par exemple reconstruits par interpolation spatiale.

Une telle maille peut être obtenue, en regardant dans l'axe du déplacement des points d'images, notamment aux conditions suivantes :

– on considère, de façon préférentielle, une image ou une zone d'image dans laquelle les mouvements des points d'image sont relativement homogènes (même objet en cours de déplacement). Toutefois, cette condition n'est pas impérative : il est également possible de traiter simultanément des points d'image quelconques de même parité;

– on réalise un sous-échantillonnage selon un taux de compression de données 1:4, pour le mode de réalisation discuté, c'est-à-dire en éliminant statistiquement un point sur deux en résolution horizontale, et un point sur deux en résolution verticale. La pleine résolution peut toutefois être obtenue lors de la reconstruction à partir de données d'assistance (par exemple vecteur-vitesse estimé), ou par interpolation spatiale comme déjà mentionné ;

– on s'efforce d'éviter d'échantillonner un point qui est approximativement la projection d'un point déjà échantillonné dans l'image précédemment échantillonnée. En effet, du fait de l'utilisation, de manière préférentielle, de vecteurs vitesse de déplacement en tant que données d'assistance à la reconstruction d'images, ce point projeté sera en effet connu à partir dudit point source précédemment transmis.

Dans le cas de l'application du principe de l'invention au sous-échantillonnage d'une source d'images désentrelacée, on réalise préférentiellement le sous-échantillonnage par paquets de quatre images successives de la séquence t, t + 1, t + 2, t + 3 (fig. 3A, 3B).

On élimine systématiquement deux images du paquet. Il s'agira avantageusement d'éliminer soit systématiquement l'image t + 1 et l'image t + 3, soit systématiquement l'image t + 2 et l'image t + 3, en fonction par exemple de critères psychovisuels. La première solution, dans le cas d'un signal désentrelacé obtenu à partir d'un signal entrelacé, correspond plutôt à un sous-échantillonnage de type à saut de trame ("field skip"), alors que la seconde solution, dans le même cas, correspond plutôt à un sous-échantillonnage du type à saut d'image ("picture skip").

Les figures 3A, 3B correspondent aux deux cas que l'on peut rencontrer, en fonction de la parité de la composante verticale du vecteur vitesse $v_y$.

Dans le cas d'un vecteur vitesse pair (ici $v_y=0$), illustré en figure 3A, on sous-échantillonnera avantageusement l'image t + 2 par élimination des lignes d'images 32 correspondant approximativement à la projection des lignes 30 transmises lors de l'échantillonnage de l'image t. En effet, ce faisant, on retient lors de l'échantillonnage uniquement les lignes 33, ce qui permet de connaître, dans le cas simple présenté, les lignes 31 éliminées lors de l'échantillonnage de l'image t. Il en résulte que l'image t + 2 pourra être parfaitement reconstruite puisque les lignes 32 seront reconstituées directement à partir des lignes 30 de l'image t, grâce à la connaissance de la valeur du vecteur vitesse $v_y$ fournie dans les données d'assistance à la reconstruction.

Bien entendu, ce cas de figure est optimisé, et correspond à un vecteur vitesse de valeur entière. Dans le cas d'un vecteur vitesse de valeur fractionnaire, on "arrondira" le vecteur vitesse à une valeur entière la plus proche.

La figure 3B illustre le procédé de sous-échantillonnage de l'invention, dans le cas d'un signal d'image désentrelacé, lorsque le vecteur vitesse $v_y$ est impair.

Le raisonnement présenté ci-dessus peut s'appliquer symétriquement, et amène à conclure que l'échantillonnage du paquet de quatre images permet d'obtenir l'information la plus diversifiée lorsque les lignes 30, 32 de même rang et de même parité sont transmises tant pour l'image t, que pour l'image t + 2.

On vérifiera que l'application de ce principe, non seulement en échantillonnage vertical, mais également en échantillonnage horizontal, permet d'obtenir une maille échantillonnée telle que représentée en figure 4, en regardant dans l'axe du déplacement.

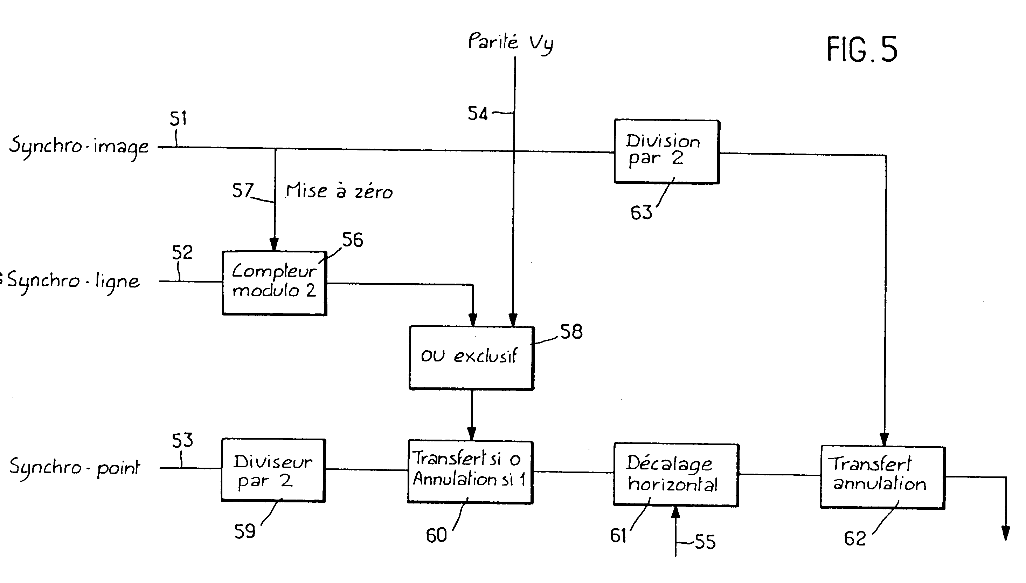

Le schéma de la figure 5 illustre de façon synoptique les différents circuits permettant de mettre en oeuvre le procédé d'échantillonnage de l'invention dans le cas de sources d'images désentrelacées.

Le circuit comprend en entrée, un signal synchro-image 51, un signal synchro-ligne 52, et un signal synchro-point 53. La parité de la composante verticale $v_y$ du vecteur-vitesse 54 et de la composante horizontale $v_x$ 55 sont également des données d'entrée.

Le circuit comprend un compteur modulo 2, 56 avec une entrée de mise à zéro 57. Un circuit OU exclusif 58 reçoit d'une part la valeur de la parité $v_y$, et d'autre part la sortie du compteur 56. La sortie du circuit OU exclusif aboutit dans la chaîne du traitement de l'information de synchronisation de points 53 comprenant successivement un diviseur par deux 59, un circuit 60 de décision de transfert ou d'élimination suivant la valeur du bit de sortie du circuit 58, un circuit de décalage horizontal 61 recevant l'information de parité $v_x$ 55, et un second circuit de décision 62 assurant le transfert ou l'élimination du point en fonction des informations en provenance d'une part du circuit de décision 61, et d'autre part d'un circuit diviseur 63 de la ligne de synchronisation image 51.

Dans le cas du sous-échantillonnage d'un signal source d'images entrelacée, le même principe qu'expliqué précédemment est employé pour la sélection des trames transmises.

Pour conserver la définition dans le cas de mouvements verticaux $v_y$ pairs, deux trames successives de la source seront transmises (la résolution horizontale est divisée par deux après préfiltrage). Les trames 3 et 4 de chaque paquet de quatre trames sont interpolées temporellement au décodeur, à partir des données d'assistance numériques contenant avantageusement une représentation des vecteurs-vitesse associés.

Pour conserver la définition dans le cas de mouvements verticaux $v_y$ impairs, on transmet une trame sur deux. La reconstruction temporelle s'adresse alors uniquement aux trames intermédiaires non transmises, et est contrôlée par les données d'assistance reçues.

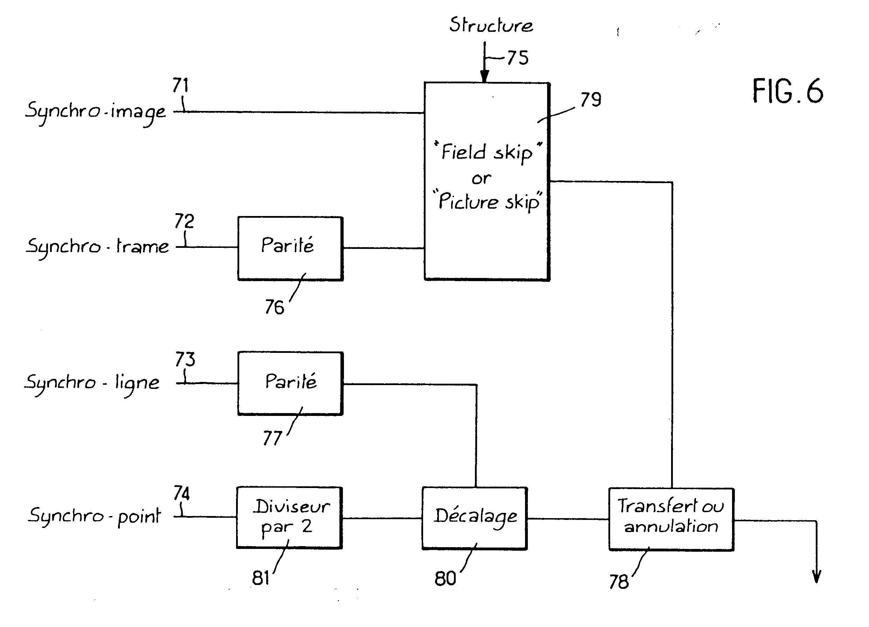

La mise en oeuvre du procédé dans le cas d'une source image entrelacée peut être effectuée au moyen d'un circuit tel que représenté en figure 6.

Ce circuit comprend quatre signaux d'entrée : un signal de synchronisation d'images 71, un signal de synchronisation de trames 72, un signal de synchronisation de lignes 73, et un signal de synchronisation de points 74.

Les signaux 72, 73 alimentent les circuits 76, 77 de détermination de parité. La décision de transfert ou d'élimination d'un point est ensuite prise par un circuit de décision 78 à partir d'une part, d'une information provenant d'un circuit 79 de sélection d'un échantillonnage à sauts de trame ("field skip"), ou à sauts d'image (picture skip"), et d'autre part, d'une information de décalage horizontal provenant d'un circuit de décision 80 recevant en entrée d'une part, une information provenant du circuit de parité de lignes 77, et d'autre part, d'un circuit diviseur par deux 81.

La sélection du mode de "saut", dans le circuit 79, résulte de la valeur de l'information "structure" 75, suivant la table suivante :
- structure "saut de trame" si $v_y$ est impair entre les trames n et n + 1 échantillonnées ;
- structure "saut d'image" si $v_y$ est pair entre les trames n et n + 1 échantillonnées.

On pourra vérifier que le fonctionnement du procédé de sous-échantillonnage utilise un même principe, en cas de source entrelacée, et de source désentrelacée. Dans la mise en oeuvre pratique, la différence résulte du fait que la sélection de lignes à échantillonner s'effectue en quelque sorte "spatialement" dans le cas d'une source désentrelacée, puisqu'il s'agit d'éliminer une ligne sur deux de chaque image. En revanche, dans le cas d'une source entrelacée, cette décision résulte en l'élimination d'une trame complète, puisque les lignes de définition d'une même "image" sont réparties par parité entre deux trames adjacentes.

Dans le cas d'une source entrelacée, on notera que le coût de traitement relatif à l'application du principe de maximisation de la diversité d'informations échantillonnées dans le sens du mouvement, selon l'invention, ne se justifie pas toujours pour l'échantillonnage horizontal. On pourra donc, le cas échéant se passer de circuits de décision d'élimination des colonnes de points des images échantillonnées en fonction de la parité de la composante horizontale des vecteurs-vitesse associés.

De façon connue, pour chaque mode d'application du procédé, un préfiltrage spatial 2D évite les repliements, et un postfiltre identique assure au décodeur la reconstruction de l'image ou de la trame HD.

## Revendications

1. Procédé de sous-échantillonnage d'un signal d'image ou de zones d'image appartenant à une séquence d'images électroniques, dans le but d'obtenir une compression dudit signal, ledit procédé étant du type consistant à déterminer un champ de vecteurs vitesse de déplacement pour chaque image à sous-échantillonner, en associant un vecteur de vitesse de déplacement dans le plan de l'image à chacun des points de ladite image, et à supprimer certaines images dans la séquence et/ou certains points d'image dans les images sous-échantillonnées, en fonction des vitesses de déplacement des points, de façon à maximiser la quantité d'information transmise sous contrainte d'un débit maximal donné, procédé caractérisé en ce que la structure de sous-échantillonnage consiste à appliquer sur chaque image, ou zone d'image, un masque de sous-échantillonnage susceptible de prendre deux positions distintes, et en ce que la position du masque d'échantillonnage est choisie de façon à éviter de retenir, pour chaque image courante, celle des deux positions revenant à sélectionner

EP 0 321 357 B1

des points d'image correspondant spatialement à la projection approximative des points source conservés lors du sous-échantillonnage de l'image sous-échantillonnée précédente, ladite projection résultant de l'application à chacun desdits points source du vecteur de vitesse de déplacement associé.

2. Procédé suivant la revendication 1, caractérisé en ce que il est adapté notamment pour la compression d'un signal d'image désentrelacée, chaque image, comprenant au moins une sous-image formée d'une superposition de lignes paires et impaires, en pleine résolution, et en ce que on sous-échantillonne au moins certains desdites sous-images, en choisissant pour chaque sous-image d'éliminer systématiquement soit toutes les lignes paires, soit toutes les lignes impaires, et en ce que on évite de conserver pour chaque sous-image sous-échantillonnée, au moins certaines des lignes de parité telle qu'elles correspondent spatialement à la projection approximative des lignes conservées lors du sous-échantillonnage de la sous-image sous-échantillonnée précédente, ladite projection résultant de l'application, aux points de ladite sous-image source sous-échantillonnée précédente, des vecteurs de vitesse de déplacement associés.

3. Procédé suivant la revendication 1, caractérisé en ce que il est adapté notamment pour la compression d'un signal d'images entrelacées, lesdites images se succédant par alternances d'une trame de lignes paires et d'une trame de lignes impaires, et en ce que on sous-échantillonne ledit signal d'image par élimination de certaines desdites trames, et en ce que on évite de conserver au moins certaines des trames de parité telle qu'elles correspondent spatialement à la projection approximative d'une trame conservée précédemment, ladite projection résultant de l'application, aux points de ladite trame source échantillonnée précédente, des vecteurs de vitesse de déplacement associés.

4. Procédé suivant l'une quelconque des revendications 1 à 3, caractérisé en ce que il est appliqué à des images, zones d'images, ou trames d'images structurées en lignes et colonnes de points d'images, caractérisé en ce que on sous-échantillonne également au moins certaines des lignes des sous-images conservées, en choisissant pour chaque image d'éliminer sélectivement soit des points de rangs pairs soit des points de rangs impairs, dans les lignes de ladite sous-image, et en ce que on évite de conserver, dans les lignes d'au moins certaines sous-images, les points dont la parité du rang dans la ligne est telle qu'ils correspondent spatialement à la projection approximative de points de sous-images conservés lors du sous-échantillonnage de la sous-image précédente, ladite projection résultant de l'application, aux points sources de ladite sous-image précédente, des vecteurs de déplacement associés.

5. Procédé de sous-échantillonnage d'un signal d'image désentrelacée, appartenant à une séquence d'images électronique, chaque image comportant au moins une sous-image formée de lignes et de colonnes de points, dans le but d'obtenir une compression verticale de ladite sous-image selon un taux de compression 1:2, caractérisé en ce que lesdites images sont sous-échantillonnées par paquets de 4 images successives, avec élimination de deux images au sein de chaque paquet, en ce qu'on détermine un champ de vecteurs de vitesse de déplacement permettant de projeter la première image sous-échantillonnée de chaque paquet dans le plan de la deuxième image sous-échantillonnée du paquet, en ce qu'on détermine au moins une zone d'image dans ladite image, par regroupement, dans la zone, de points d'image associés à des vecteurs de vitesse de déplacement de même parité, la parité d'un vecteur-vitesse de déplacement étant définie comme étant la parité en pixels du déplacement arrondi du point correspondant, dans le plan d'images, entre l'image sous-échantillonnée précédente et l'image sous-échantillonnée courante, et en ce qu'on élimine systématiquement dans ladite zone d'image, d'une part, pour chaque première image sous-échantillonnée conservée d'un paquet, soit les lignes paires, soit les lignes impaires, et d'autre part, pour la seconde image sous-échantillonnée conservée dudit paquet, les lignes de parité telle qu'elles correspondent spatialement approximativement à la projection du jeu de lignes conservées dans ladite première image sous-échantillonnée du paquet, ladite projection résultant de l'application, aux points sources de ladite première image sous-échantillonnée, des vecteurs de vitesse de déplacement associés.

6. Procédé de sous-échantillonnage d'un signal d'images entrelacées, appartenant à une séquence d'images électroniques, ledit signal d'image étant formé de la succession d'alternances d'une trame paire et d'une trame impaire, dans le but d'obtenir une compression verticale de chaque image selon un taux de compression 1:2, caractérisé en ce que lesdites trames sont sous-échantillonnées par paquets de quatre trames successives, en éliminant systématiquement la dernière trame de chaque paquet, ainsi que soit la deuxième trame, soit la troisième trame du paquet, en ce qu'on détermine un champ de vecteurs de vitesse de déplacement permettant de projeter la première trame sous-échantillonnée de chaque paquet dans le plan de la deuxième trame sous-échantillonnée du paquet, en ce qu'on détermine au moins une zone d'image dans ladite image, par regroupement des points d'image associés à des vecteurs vitesse de déplacement de même parité, la parité d'un vecteur-vitesse de déplacement étant défini comme étant la parité en pixels du déplacement arrondi du point correspondant, dans le plan d'image, entre la trame sous-échantillonnée précédente et la trame sous-échantillonnée courante, et en ce qu'on conserve systématiquement chaque première trame au sein de chaque paquet, et on choisit d'éliminer soit la deuxième trame, soit la troisième trame du paquet de façon à éliminer

7

la trame de parité telle qu'elle correspond spatialement approximativement à la projection de ladite première trame sous-échantillonnée du paquet, ladite projection résultant de l'application, aux points de ladite première trame sous- échantillonnée, des vecteurs vitesse de déplacement associés.

7. Procédé de sous-échantillonnage selon l'une quelconque des revendications 5 ou 6, caractérisé en ce que lesdites images comportent au moins une zone d'images formée de lignes et de colonnes de points, dans le but de faire subir auxdites images, une compression horizontale additionnelle selon un taux de compression 1:2, et en ce que on sous-échantillonne systématiquement chacune des images sous-échantillonnées verticalement, en choisissant d'éliminer systématiquement, pour chaque image, les colonnes des rangs pairs, ou les colonnes des rangs impairs, et en ce que la parité des colonnes éliminées, pour chaque image, est telle que lesdites colonnes éliminées correspondent spatialement approximativement à la projection des colonnes conservées dans l'image sous-échantillonnée précédente, ladite projection résultant de l'application, aux points desdites colonnes de l'image source précédente, des vecteurs-vitesse de déplacement associés.

## Claims

1. Process for subsampling a picture-area, or picture, signal belonging to a sequence of electronic pictures or images, with a view to obtaining a compression of said signal, said process being of the type consisting of determining a displacement velocity vector field for each picture to be subsampled, by associating a displacement velocity vector in the plane of the picture with each of the points of said picture and eliminating certain pictures in the sequence and/or certain picture points in the subsampled pictures, as a function of the displacement velocities of the points, so as to maximize the information quantity transmitted under the constraint of a given maximum flow rate, characterized in that the subsampling structure consists of applying to each picture or picture area, a subsampling mask able to assume two separate positions and in that the subsampling mask position is chosen in such a way as to avoid the retention for each current picture, whichever of the two positions amounts to selecting picture points corresponding spatially to the approximate projection of the source points retained during the subsampling of the preceding subsampled picture, said projection resulting from the application to each of said source points of the associated displacement velocity vector.

2. Process according to claim 1, characterized in that it is in particular suitable for the compression of a deinterlaced picture signal, each picture comprising at least one subpicture formed by a superimposing of even and uneven lines, in full resolution, and in that subsampling takes place of at least certain of said subpictures, by choosing for each subpicture to systematically eliminate either all the even lines, or all the uneven lines, and in that for each subsampled subpicture it is ensured that there is no retention of at least certain of the parity lines such as correspond spatially to the approximate projection of the lines retained during the subsampling of the preceding subsampled subpicture, said projection resulting from the application to the points of said preceding subsampled source subpicture associated displacement velocity vectors.

3. Process according to claim 1, characterized in that it is particularly adapted to the compression of a signal of interlaced pictures, said pictures succeeding by alternation of a field of even lines and field of uneven lines, and in that subsampling takes place of said picture signal by the elimination of certain of the fields, and in that it is ensured that there is no retention of at least some of the parity fields such that they correspond spatially to the approximate projection of a previously retained field, said projecion resulting from the application to the points of said preceding sample souce field of the associated displacement velocity vectors.

4. Process according to any one of the claims 1 to 3, characterized in that it is applied to pictures, picture areas or picture fields structured in rows and columns of picture points, subsampling also taking place of at least some of the rows of retained subpictures, by choosing for each picture the selective elimination of either the even rank points or the even rank points in the rows of said subpicture, and that there is no retention in the rows of at least certain subpictures of the points whose rank parity in the row is such that they spatially correspond to the approximate projection of points of subpictures retained during the subsampling of the preceding subpicture, said projection resulting from the application to the source points of said preceding subpicture of the associated displacement velocity vectors.

5. Process for the subsampling of a deinterlaced picture signal belonging to an electronic picture sequence, each picture having at least one subpicture formed from rows and columns of points, with a view to obtaining a vertical compression of said subpicture with a ccmpression ratio of 1:2, characterized in that said pictures are subsampled in groups of four successive pictures with the elimination of two pictures within each group, in that determination takes place of a field of displacement velocity vectors making it possible to project said first subsampled picture of each group into the plane of the second subsampled picture of the group, in that determination takes place of at least one picture area in said picture, by regrouping within the area picture points associated with displacement velocity vectors of the same parity, the parity of a displacement velocity vector being defined as the parity in pixels of the rounded off displacement of the corresponding point, in the picture plane, between the preceding subsampled picture and the current subsampled picture and in that systematic elimination takes place in said picture area on the one hand for each first retained subsampled picture of a group, either the even lines, or the uneven lines, and on the other hand for the second retained subsampled picture of said group, the parity lines such that they approximately spatially correspond to the projection of the set of retained lines in said first subsampled picture of the group, said projection resulting from the application to the source points of said first subsampled picture of the associated displacement velocity vectors.

6. Process for the subsampling of an interlaced picture signal belonging to an electronic picture sequence, said picture signal being formed from the succession of alternations of an even field and an uneven field with a view to obtaining a vertical compression of each picture with a compression ratio of 1:2, characterized in that said fields are subsampled by groups of four successive fields by systematically eliminating the final field of each group, as well as either the second field, or the third field of the group, in that determination takes place of a field of displacement velocity vectors making it possible to project the first subsampled field of each group in the plane of the second subsampled field of the group, in that determination takes place of at least one picture area in said picture by regrouping picture points associated with the displacement velocity vectors of the same parity, the parity of a displacement velocity vector being defined as the parity in pixels of the rounded off displacement of the corresponding point, in the picture plane, between the preceding subsampled field and the current subsampled field, and in that systematic retention takes place of each first field within each group and either the second field, or the the field is eliminated from the group so as to eliminate the parity field such that it spatially approximately corresponds to the projection of said first subsampled field of the group, the said projection resulting from the application to the points of said subsampled first field of associated displacement velocity vectors.

7. Subsampling process according to any one of the claims 5 or 6, characterized in that said pictures have at least one picture area formed from rows and columns of points, with a view to making said pictures undergo an additional horizontal compression with a compression ratio of 1:2, in that systematic subsampling takes place of each of the vertically subsampled pictures, by choosing to systematically eliminate for each picture, the columns of even ranks or the columns of uneven ranks,and in that the parity of the eliminated columns for each picture is such that the eliminated columns spatially approximately correspond to the projection of the retained columns in the preceding subsampled picture, said projection resulting from the application to the points of the columns of the preceding source picture of the associated displacement velocity vectors.

## Patentansprüche

1. Verfahren zur Teil-Abtastung eines Bildsignals oder Bildzonensignals, das zu einer Folge von elektronischen Bildern gehört, mit dem Ziel, eine kompression des Signals zu erhalten, wobei das Verfahren gattungsgemäß darin besteht, ein Feld von Vektoren der Bewegungsgeschwindigkeit für jedes teil-abzutastende Bild zu bestimmen, indem man jedem der Punkte des Bildes einen Vektor der Bewegungsgeschwindigkeit in der Bildebene zuordnet, und in Abhängigkeit von der Bewegungsgeschwindigkeit der punkte einige Bilder in der Folge und/oder einige Bildpunkte in den teil-abgetasteten Bildern wegzulassen, derart, daß man die übertragene Informationsmenge unter der Beschränkung einer gegebenen Durchlaßrate maximiert, dadurch gekennzeichnet, daß die Struktur der Teil-Abtastung darin besteht, daß man auf jedes Bild oder jede Bildzone eine Teil-Abtastmaske anwendet, die zwei unterschiedliche Positionen einnehmen kann, und daß man die position der Teil -Abtastmaske so auswählt, daß man die Wahl derjenigen der beiden Positionen für jedes laufende Bild vermeidet, die auf eine Wahl der Bildpunkte hinausläuft, die räumlich der angenäherten projektion der Quellpunkte entspricht, die bei der Teil-Abtastung des vorhergehenden teil-abgestasteten Bildes festgehalten wurde, wobei die projektion aus der Anwendung des zugeordneten Vektors der Bewegungsgeschwindigkeit auf jeden der Quellpunkte resultiert.

2. Verfahren nach Anspruch 1, dadurch gekennzeichnet, daß es insbesondere zur kompression eines nicht im Zeilensprung abgetasteten Bildsignals geeignet ist, wobei jedes Bild wenigstens ein Teilbild umfaßt, das aus einer Überlagerung von geraden und ungeraden Zeilen in voller Auflösung gebildet wird, daß man wenigstens einige der Teilbilder teil-abtastet, indem man für jedes Teilbild eine systematische Elimination entweder aller geraden Zeilen oder aller ungeraden Zeilen auswählt, und daß man es vermeidet, für jedes teil-abgetastete Teilbild, wenigstens einige der Zeilen mit parität festzuhalten, derart, daß sie räumlich der angenäherten Projektion derjenigen Zeilen entsprechen, die bei der Teil-Abtastung des vorhergehenden teil-abgetasteten Teilbildes festgehalten wurden, wobei die projektion aus der Anwendung der zugeordneten Vektoren der Bewegungsgeschwindigkeit auf die Punkte des vorhergehenden teil-abgetasteten Quell-Teilbildes resultiert.

3. Verfahren nach Anspruch 1, dadurch gekennzeichnet, daß es insbesondere zur kompression eines im Zeilensprung abgetasteten Bildsignals geeignet ist, wobei die Bilder abwechselnd als Rahmen von geraden Zeilen und Rahmen von ungeraden Zeilen folgen, daß man das Bildsignal unter Elimination von einigen dieser Rahmen teil-abtastet, und daß man es vermeidet, wenigstens einige der Rahmen mit Parität festzuhalten, derart, daß sie räumlich der angenäherten projektion eines vorher festgehaltenen Rahmens entsprechen, wobei die projektion aus der Anwendung der zugeordneten Vektoren der Bewegungsgeschwindigkeit auf die punkte des vorhergehenden teil-abgetasteten Quell-Rahmens resultiert.

4. Verfahren nach einem der Ansprüche 1 bis 3, dadurch gekennzeichnet, daß es auf Bilder, Bildzonen oder Bildrahmen, die eine Zeilen- und Spaltenstruktur von Bildpunkten aufweisen, angewendet wird, daß man auch wenigstens einige der Zeilen der festgehaltenen Teilbilder teil-abtastet, indem man für jedes Bild die selektive Elimination entweder der Punkte mit geraden Rängen oder der punkte mit ungeraden Rängen bei den Zeilen dieses Teilbildes wählt, und daß man es vermeidet, bei den Zeilen von wenigstens einigen Teilbildern, die Punkte festzuhalten, deren parität des Rangs in der Zeile derart ist, daß sie räumlich der angenäherten projektion von Punkten von Teilbildern entsprechen, die bei der Teil-Abtastung des vorhergehenden Teilbilds festgehalten wurden, wobei die projektion aus der Anwendung der zugeordneten Vektoren der Bewegungsgeschwindigkeit auf die Quellpunkte des vorhergehenden Teilbildes resultiert.

5. Verfahren zur Teil-Abtastung eines nicht im Zeilensprung abgetasteten Bildsignals, das zu einer Folge von elektronischen Bildern gehört, wobei jedes Bild wenigstens ein Teilbild umfaßt, das aus Zeilen und Spalten von punkten gebildet ist, mit dem Ziel, eine vertikale kompression des Teilbildes gemäß einem kompressionsverhältnis von 1:2 zu erhalten, dadurch gekennzeichnet, daß man die Bilder in Paketen von vier aufeinanderfolgenden Bildern mit Elimination von zwei Bildern in jedem Paket teil-abtastet, wobei man ein Feld von Vektoren der Bewegungsgeschwindigkeit bestimmt, das es ermöglicht, das erste teil-abgetastete Bild jedes pakets in die Ebene des zweiten teil-abgetasteten Bildes des pakets zu projizieren, daß man wenigstens eine Bildzone in dem Bild bestimmt, indem man in der Zone die Bildpunkte umgruppiert, die Vektoren der Bewegungsgeschwindigkeit derselben Parität zugeordnet sind, wobei die Parität eines Vektors der Bewegungsgeschwindigkeit definiert ist als die Parität in Pixeln der gerundeten Bewegung des entsprechenden Punktes in der Bildebene, zwischen dem vorhergehenden teil-abgetasteten Bild und dem laufenden teilabgetasteten Bild, und daß man in dieser Bildzone systematisch einerseits für jedes festgehaltene erste teil-abgetastete Bild eines pakets entweder die geraden Zeilen oder die ungeraden Zeilen und andererseits für das festgehaltene zweite teil-abgetastete Bild des pakets die Zeilen mit parität eliminiert, derart, daß sie rämlich angenähert der projektion der festgehaltenen Gruppe von Zeilen entsprechen, die beim ersten teil-abgetasteten Bild des pakets festgehalten wurden, wobei die projektion aus der Anwendung der zugeordneten Vektoren der Bewegungsgeschwindigkeit auf die Quellpunkte des ersten teil-abgetasteten Bildes resultiert.

6. Verfahren zur Teil-Abtastung eines im Zeilensprung abgetasteten Bildsignals, das zu einer Folge von elektronischen Bildern gehört, wobei das Bildsignal aus der abwechselnden Hintereinanderfolge eines geraden Rahmens und eines ungeraden Rahmens gebildet ist, mit dem Ziel, eine vertikale kompression jedes Bildes gemäß einem kompressionsverhältnis von 1:2 zu erhalten, dadurch gekennzeichnet, daß man die Rahmen in paketen von vier aufeinanderfolgenden Rahmen teil-abtastet, wobei man den letzten Rahmen jedes pakets ebenso wie entweder den zweiten Rahmen oder den dritten Rahmen des pakets systematisch eliminiert, daß man ein Feld von Vektoren der Bewegungsgeschwindigkeit bestimmt, das es ermöglicht, den ersten teil-abgetasteten Rahmen jedes pakets in die Ebene des zweiten teil-abgetasteten Rahmens des Pakets zu projizieren, daß man wenigstens eine Bildzone in dem Bild bestimmt, indem man die Bildpunkte umgruppiert, die Vektoren der Bewegungsgeschwindigkeit derselben Parität zugeordnet sind, wobei die parität eines Vektors der Bewegungsgeschwindigkeit definiert ist als die parität in pixeln der gerundeten Bewegung des entsprechenden punktes in der Bildebene, zwischen dem vorhergehenden teil-abgetasteten Bild und dem laufenden teilabgetasteten Bild, und daß man systematisch jeden ersten Rahmen im paket festhält und die Elimination entweder des zweiten Rahmens oder des dritten Rahmens des Pakets wählt, indem man den Rahmen mit parität eliminiert, derart, daß er räumlich angenähert der projektion des ersten teilabgetasteten Rahmens des Pakets entspricht, wobei die projektion aus der Anwendung der zugeordneten Vektoren der Bewegungsgeschwindigkeit auf die punkte des ersten teil-abgetasteten Rahmens resultiert.

7. Verfahren zur Teil-Abtastung nach einem der Ansprüche 5 oder 6, dadurch gekennzeichnet, daß die Bilder wenigstens eine Bildzone umfassen, die aus punktzeilen und -spalten gebildet ist, mit dem Ziel, diese Bilder einer zusätzlichen horizontalen kompression gemäß einem kompressionsverhältnis von 1:2 zu unterziehen, und dadurch gekennzeichnet, daß man systematisch jedes vertikal teil-abgetastete Bild teil-abtastet, indem man für jedes Bild die systematische Elimination der Spalten mit geraden Rängen oder der Spalten mit ungeraden Rängen wählt, und daß die parität der eliminierten Spalten für jedes Bild derart ist, daß die eliminierten Spalten räumlich näherungsweise der projektion der Spalten entsprechen, die beim vorhergehenden teil-abgetasteten Bild festgehalten wurden, wobei die projektion aus der Anwendung der zugeordneten Vektoren der Bewegungsgeschwindigkeit auf die punkte der Spalten des vorhergehenden Quellbildes resultiert.

**10**

## FIG.1

## FIG.2

Temps

Vertical

30 ✕
31 •
30 ✕ ——— $V_y = 0$ ———→ 32
(Vitesse paire)
31 •
30 ✕

32 •
33 ✕
32
33 ✕
32 •

t    t+1    t+2    t+3

FIG.3a

Temps

Vertical

30 ✕ ——— $V_y = 1$ ———→ 32 ✕
(Vitesse impaire)

30 ✕    32 ✕

t    t+1    t+2    t+3

FIG.3b

Horizontal

Vertical

FIG.4

FIG.5

Parité Vy

Synchro·image —|— 51

54 —

Division par 2 — 63

57 — Mise à zéro

52 —| Synchro·ligne

Compteur modulo 2 — 56

OU exclusif — 58

53 —| Synchro·point

Diviseur par 2 — 59

Transfert si o Annulation si 1 — 60

Décalage horizontal — 61

—55

Transfert annulation — 62

EP 0 321 357 B1

FIG.6